# EUROPEAN PATENT SPECIFICATION

(11) **EP 4 485 603 B1**
(45) Date of publication and mention of the grant of the patent: **29.10.2025**
(21) Application number: 23781392.8
(22) Date of filing: 30.03.2023
(51) Int. Cl.: H01M 10/0567, H01M 4/525, H01M 4/505, H01M 10/052, H01M 10/0525, H01M 10/0569

(54) **NON-AQUEOUS ELECTROLYTE FOR LITHIUM SECONDARY BATTERY AND LITHIUM SECONDARY BATTERY INCLUDING SAME**
WASSERFREIER ELEKTROLYT FÜR LITHIUMSEKUNDÄRBATTERIE UND LITHIUMSEKUNDÄRBATTERIE DAMIT
ÉLECTROLYTE NON AQUEUX POUR BATTERIE SECONDAIRE AU LITHIUM ET BATTERIE SECONDAIRE AU LITHIUM LE COMPRENANT

(30) Priority: 30.03.2022 KR 20220039951
(43) Date of publication of application: 01.01.2025
(73) Proprietor: LG Energy Solution, Ltd., Seoul 07335 (KR)
(72) Inventor: KANG, Yoo Sun, Daejeon 34122 (KR); LEE, Chul Haeng, Daejeon 34122 (KR); LEE, Jung Hoon, Daejeon 34122 (KR); PARK, Sol Ji, Daejeon 34122 (KR); LEE, Jae Won, Daejeon 34122 (KR)
(74) Representative: Hoffmann Eitle
(86) International application number: PCT/KR2023/004265
(87) International publication number: WO 2023/191540

(56) References cited:
- WO-A1-2022/211320
- JP-A- 2007 095 983
- KR-A- 20090 080 298
- KR-A- 20200 059 924
- KR-A- 20200 089 623
- KR-A- 20200 089 623
- KR-B1- 101 297 786
- KR-B1- 102 240 799
- US-B2- 9 269 987
- NGUYEN, D.Q. ; BAE, H.W. ; JEON, E.H. ; LEE, J.S. ; CHEONG, M. ; KIM, H. ; KIM, H.S. ; LEE, H.: "Zwitterionic imidazolium compounds with high cathodic stability as additives for lithium battery electrolytes", JOURNAL OF POWER SOURCES, ELSEVIER, AMSTERDAM, NL, vol. 183, no. 1, 15 August 2008 (2008-08-15), AMSTERDAM, NL, pages 303 - 309, XP022832969, ISSN: 0378-7753, DOI: 10.1016/j.jpowsour.2008.04.047

## Description

### TECHNICAL FIELD

### Cross-reference to Related Applications

This application claims priority from Korean Patent Application No. 10-2022-0039951, filed on March 30, 2022.

### Technical Field

The present invention relates to a non-aqueous electrolyte solution for a lithium secondary battery and a lithium secondary battery including the same.

### BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte solution that becomes a medium for transferring the lithium ions is injected thereinto and the battery case is then sealed.

Since the lithium secondary battery may be miniaturized and has high energy density and working voltage, it is being used in various fields such as mobile devices, electronic products, and electric vehicles. As the field of application of the lithium secondary battery is diversified, physical property conditions required are also gradually increasing, and, particularly, development of a lithium secondary battery, which may be stably operated even under high-temperature conditions and has long life characteristics, is required.

In a case in which the lithium secondary battery is operated under high-temperature conditions, PF₆⁻ anions may be thermally decomposed from a lithium salt, such as LiPF₆, contained in the electrolyte solution to generate a Lewis acid such as PF₅, and this reacts with moisture to generate HF. Decomposition products, such as PF₅ and HF, may not only destroy a film formed on a surface of the electrode, but may also cause a decomposition reaction of an organic solvent. Also, the decomposition products of the electrolyte solution may react with a decomposition product of the positive electrode active material to dissolve transition metal ions, and the dissolved transition metal ions may be electrodeposited on the negative electrode to destroy a film formed on a surface of the negative electrode.

Since performance of the battery is further degraded if the electrolyte decomposition reaction continues on the destroyed film as described above, there is a need to develop a secondary battery capable of maintaining excellent performance even under high-temperature conditions. US9269987B2 discloses a non-aqueous electrolyte solution comprising 1,3 sulfanatoimidazolium.

### [Prior Art Document]

### [Patent Document]

KR 10-2003-0061219 A

### DISCLOSURE OF THE INVENTION

### TECHNICAL PROBLEM

An aspect of the present invention provides a non-aqueous electrolyte solution, which may scavenge electrolyte solution decomposition products and may form a strengthened film on an electrode by including an imidazolium sulfonate-based compound, and a lithium secondary battery which exhibits long life characteristics even during high-temperature operation by including the same.

### TECHNICAL SOLUTION

According to an aspect of the present invention, there is provided a non-aqueous electrolyte solution for a lithium secondary battery which includes: a lithium salt; an organic solvent; and a compound represented by Formula 1.

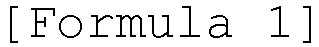

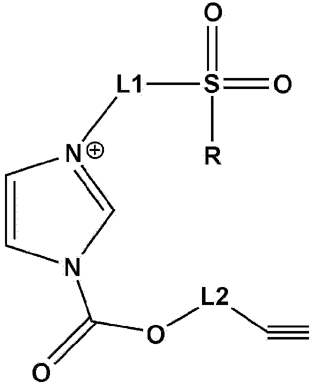

In Formula 1,
R is O⁻; or OR1, wherein R1 is hydrogen; or an alkyl group having 1 to 10 carbon atoms,
L1 is a direct bond; or an alkylene group having 1 to 30 carbon atoms, and
L2 is an alkylene group having 1 to 10 carbon atoms.

According to another aspect of the present invention, there is provided a lithium secondary battery including: a positive electrode including a positive electrode active material; a negative electrode including a negative electrode active material; a separator disposed between the positive electrode and the negative electrode; and the non-aqueous electrolyte solution for a lithium secondary battery.

### ADVANTAGEOUS EFFECTS

Since a nitrogen atom of a cationic part in a structure of a compound represented by Formula 1, which is included as an additive in a non-aqueous electrolyte solution according to the present invention, may act as a Lewis base to effectively scavenge a Lewis acid generated as an electrolyte decomposition product and a film on a positive electrode or negative electrode may be strengthened by a sulfonate (-RSO₃⁻) and a propargyl group (-CH₂C≡CH), a lithium secondary battery with improved high-temperature storage characteristics and degree of self-discharge due to dissolution of the positive electrode may be achieved when the non-aqueous electrolyte solution is used in the lithium secondary battery.

### MODE FOR CARRYING OUT THE INVENTION

Hereinafter, the present invention will be described in more detail.

In general, anions included in a lithium salt, such as LiPF₆, which is widely used in an electrolyte solution for a lithium secondary battery, form decomposition products, such as hydrogen fluoride (HF) and PF₅, due to thermal decomposition or moisture. These decomposition products have acidic properties and deteriorate a film or electrode surface in the battery.

Transition metals in a positive electrode are easily dissolved into the electrolyte solution due to the decomposition products of the electrolyte solution and structural changes of the positive electrode according to repeated charge and discharge, and the dissolved transition metals are re-deposited on the positive electrode to increase resistance of the positive electrode. In addition, in a case in which the dissolved transition metals move to a negative electrode through the electrolyte solution, the dissolved transition metals are electrodeposited on the negative electrode and grown to cause an internal short circuit, and, as a result, self-discharge of the negative electrode occurs so that it becomes a cause of low-voltage failure. Also, since the dissolved transition metals destruct a solid electrolyte interphase (SEI) film when being electrodeposited on the negative electrode, they become a cause of an additional electrolyte decomposition reaction, and, as a result, problems, such as consumption of lithium ions and an increase in resistance, occur.

Furthermore, a protective film is formed on the positive electrode and the negative electrode by an electrolyte solution reaction during initial activation of the battery, wherein, in a case in which the film becomes unstable for the above reason, additional decomposition of the electrolyte solution occurs during charge-discharge or high-temperature exposure to promote degradation of the battery and generate gas.

Thus, the present inventors have included a compound represented by the following Formula 1 containing a sulfonate (-RSO₃⁻) and a propargyl group (-CH₂C≡CH), which is effective in strengthening the film, in a non-aqueous electrolyte solution. The sulfonate (-RSO₃⁻) forms a polymerization structure and a LiSO₃-based film while being reduced at the negative electrode. With respect to the propargyl group (-CH₂C≡CH), it is reduced to form propargyl radicals and the formed radicals form a thin and dense film on a surface of the negative electrode through polymerization. Also, since the compound represented by the following Formula 1 includes a Lewis base functional group capable of scavenging Lewis acid decomposition products, such as HF and PF₅, generated during operation of a lithium secondary battery, it has been confirmed that the non-aqueous electrolyte solution containing the compound represented by the following Formula 1 has an effect of preventing degradation of the battery even under high-temperature conditions of 40°C or higher.

Hereinafter, each component constituting the present invention will be described in more detail.

### Non-aqueous Electrolyte Solution

The present invention provides a non-aqueous electrolyte solution for a lithium secondary battery which includes: a lithium salt; an organic solvent; and a compound represented by Formula 1.

Hereinafter, each component will be described in detail.

### (1) Compound Represented by Formula 1

The non-aqueous electrolyte solution of the present invention includes a compound represented by Formula 1 below.

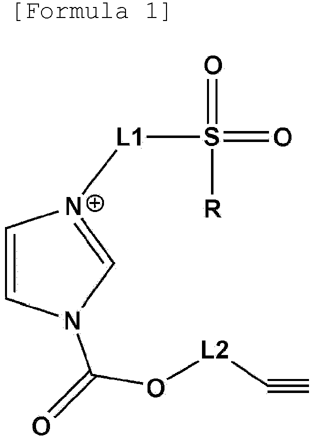

In Formula 1,
R is O⁻; or OR1, wherein R1 is hydrogen; or an alkyl group having 1 to 10 carbon atoms,
L1 is a direct bond; or an alkylene group having 1 to 30 carbon atoms, and
L2 is an alkylene group having 1 to 10 carbon atoms.

The compound represented by Formula 1 has an effect of strengthening the film on the electrode due to a structure containing sulfonate and propargyl.

The sulfonate (-RSO₃⁻) may form a polymerization structure and a LiSO₃-based film while being reduced at the negative electrode. Also, a lowest unoccupied molecular orbital (LUMO) value of the compound of Formula 1 may be reduced and reducibility of the negative electrode may be further improved by including the sulfonate in the structure.

Furthermore, the propargyl group (-CH₂C≡CH) included in the structure of Formula 1 is reduced to form propargyl radicals, and the formed radicals may form a thin and dense film on the surface of the negative electrode through polymerization.

Also, in the compound represented by Formula 1, nitrogen present in imidazolium may act as a Lewis base. Thus, since the Lewis acid, such as HF, generated from the electrolyte decomposition product may be easily scavenged, a problem of dissolving the transition metal due to the attack of the positive electrode by the Lewis acid may be significantly prevented.

Accordingly, since the non-aqueous electrolyte solution of the present invention uses the compound represented by Formula 1 as an additive, a lithium secondary battery, which achieves effects of improving life performance and reducing resistance and gas particularly at high temperatures, may be achieved.

In an embodiment of the present invention, the compound represented by Formula 1 may be represented by Formula 1-1 or Formula 1-2 below.

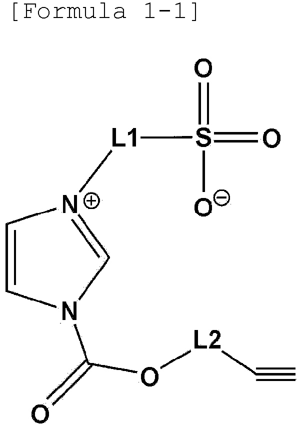

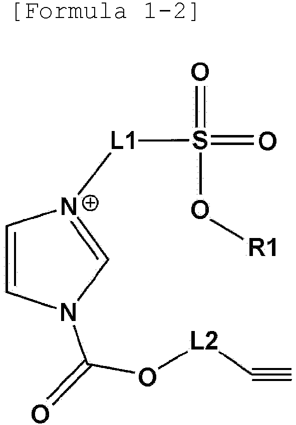

In Formulae 1-1 and 1-2,
R1, L1, and L2 are as defined in Formula 1.

Specifically, in a case in which the compound represented by Formula 1 of the present application is a compound having a structure of zwitterion, a neutral molecule having an anionic part and a cationic part in its structure as in Formula 1-1, ionic conductivity may be further improved by the zwitterion.

In a case in which the compound represented by Formula 1 of the present application has a structure of Formula 1-2, a nitrogen atom of a cationic part in the structure may act as a Lewis base to effectively scavenge a Lewis acid generated as an electrolyte decomposition product.

In an embodiment of the present invention, L1 is represented by -(CH₂)ₙ-, wherein n may be an integer of 1 to 20, may preferably be an integer of 2 to 10, and may more preferably be 2 or 3.

L2 is represented by -(CH₂)ₘ-, wherein m may be an integer of 1 to 10, may preferably be an integer of 1 to 3, and may more preferably be 1.

In an embodiment of the present invention, the compound represented by Formula 1 may be represented by Formula 1A or Formula 1B below.

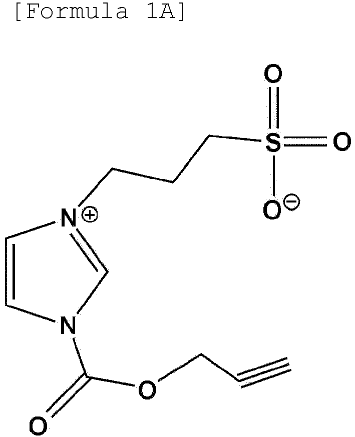

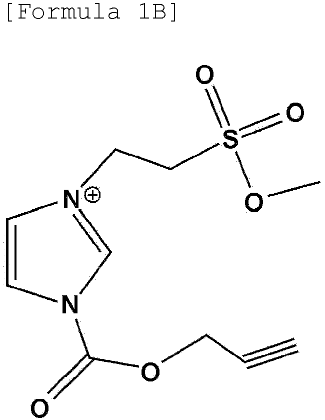

In an embodiment of the present invention, an amount of the compound represented by Formula 1 may be 0.1 wt% or more, preferably 0.3 wt% or more, and more preferably 0.5 wt% or more based on a total weight of the non-aqueous electrolyte solution. In this case, it is desirable in that it shows a significant effect of scavenging the decomposition product and improving film durability.

Also, the amount of the compound represented by Formula 1 may be 5 wt% or less, preferably 3 wt% or less, and more preferably 2 wt% or less based on the total weight of the non-aqueous electrolyte solution. In this case, it is desirable in that formation of a by-product and a side reaction due to an excessive amount of the additive may be prevented.

Most preferably, the amount of the compound represented by Formula 1 may be in a range of 1 wt% to 2 wt% based on the total weight of the non-aqueous electrolyte solution.

### (2) Additive

In order to prevent the electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the non-aqueous electrolyte solution of the present invention may optionally further include the following additives, if necessary.

The additive may be at least one selected from a cyclic carbonate-based compound, a halogen-substituted carbonate-based compound, a sultone-based compound, a sulfate-based compound, a phosphate-based or phosphite-based compound, a borate-based compound, a nitrile-based compound, an amine-based compound, a silane-based compound, a benzene-based compound, and a lithium salt-based compound.

The cyclic carbonate-based compound may be at least one selected from vinylene carbonate (VC) and vinylethylene carbonate (VEC), and may specifically be vinylene carbonate.

The halogen-substituted carbonate-based compound may be fluoroethylene carbonate (FEC).

The sultone-based compound is a material capable of forming a stable SEI film by a reduction reaction on the surface of the negative electrode, wherein the sultone-based compound may be at least one compound selected from 1,3-propane sultone (PS), 1,4-butane sultone, ethane sultone, 1,3-propene sultone (PRS), 1,4-butene sultone, and 1-methyl-1,3-propene sultone, and may specifically be 1,3-propane sultone (PS).

The sulfate-based compound is a material which may be electrically decomposed on the surface of the negative electrode to form a stable SEI film that does not crack even during high-temperature storage, wherein the sulfate-based compound may be at least one selected from ethylene sulfate (Esa), trimethylene sulfate (TMS), or methyl trimethylene sulfate (MTMS).

The phosphate-based or phosphite-based compound may be at least one selected from lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound may be lithium tetraphenylborate.

The nitrile-based compound may be at least one selected from succinonitrile (SN), adiponitrile (ADN), acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl)ether (ASA3), 1,3,6-hexanetricarbonitrile (HTCN), 1,4-dicyano 2-butene (DCB), and 1,2,3-tris(2-cyanoethyl)propane (TCEP).

The amine-based compound may be at least one selected from triethanolamine and ethylenediamine, and the silane-based compound may be tetravinylsilane.

The benzene-based compound may be at least one selected from monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may be at least one compound selected from lithium difluorophosphate (LiDFP; LiPO₂F₂), lithium bis(oxalato)borate (LiBOB; LiB(C₂O₄)₂), lithium tetrafluoroborate (LiBF₄), and lithium difluorobis(oxalato)phosphate (LiDFOP).

The non-aqueous electrolyte solution according to an embodiment of the present invention may further include at least one additive selected from vinylene carbonate (VC), vinyl ethylene carbonate (VEC), fluoroethylene carbonate (FEC), 1,3-propane sultone (PS), 1,3-propene sultone (PRS), ethylene sulfate (ESa), succinonitrile (SN), adiponitrile (ADN), ethylene glycol bis (2-cyanoethyl)ether (ASA3), 1,3,6-hexanetricarbonitrile (HTCN), 1,4-dicyano 2-butene (DCB), 1,2,3-tris(2-cyanoethyl)propane (TCEP), lithium difluoro(oxalato)borate (LiODFB), lithium tetrafluoroborate (LiBF₄), lithium difluorobis(oxalato)phosphate (LiDFOP), and lithium difluorophosphate (LiDFP).

Preferably, the non-aqueous electrolyte solution may further include at least one additive selected from vinylene carbonate (VC), 1,3-propane sultone (PS), ethylene sulfate (ESa), and lithium difluorophosphate (LiDFP).

An amount of the additive may be in a range of 0.1 wt% to 10 wt%, preferably 0.3 wt% to 5 wt%, and more preferably 1 wt% to 3 wt% based on the total weight of the non-aqueous electrolyte solution. When the amount of the additive is within the above range, there is an effect of suppressing the side reaction through film formation on the positive electrode and the negative electrode.

### (3) Organic Solvent

The non-aqueous electrolyte solution of the present invention includes an organic solvent.

Various organic solvents typically used in a lithium electrolyte may be used as the organic solvent without limitation. For example, the organic solvent may be a cyclic carbonate-based solvent, a linear carbonate-based solvent, a linear ester-based solvent, a cyclic ester-based solvent, a nitrile-based solvent, or a mixture thereof, may preferably include a mixture of at least two selected from a cyclic carbonate-based solvent, a linear carbonate-based solvent, and a linear ester-based solvent, and may more preferably include a mixture of a cyclic carbonate-based solvent and a linear carbonate-based solvent.

The cyclic carbonate-based solvent may well dissociate a lithium salt in the electrolyte due to high permittivity as a highly viscous organic solvent, wherein the cyclic carbonate-based solvent may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, preferably, may include ethylene carbonate (EC) or propylene carbonate (PC).

Also, the linear carbonate-based solvent is an organic solvent having low viscosity and low permittivity, wherein the linear carbonate-based solvent may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may preferably include ethyl methyl carbonate (EMC), dimethyl carbonate (DMC), or diethyl carbonate (DEC).

In order to prepare an electrolyte solution having high ionic conductivity, it is desirable that a mixture of the cyclic carbonate-based solvent and the linear carbonate-based solvent is used as the organic solvent.

The linear ester-based solvent may be at least one selected from methyl acetate, ethyl acetate, propyl acetate, methyl propionate, ethyl propionate, propyl propionate, and butyl propionate, and may preferably be methyl propionate, ethyl propionate, or propyl propionate.

The cyclic ester-based solvent may be at least one selected from γ-butyrolactone, γ-valerolactone, γ-caprolactone, σ-valerolactone, and ε-caprolactone.

The nitrile-based solvent may be at least one selected from succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

A remainder excluding other components except for the organic solvent, for example, the amounts of the compound represented by Formula 1, the additive, and the lithium salt, in the total weight of the non-aqueous electrolyte solution may all be the organic solvent unless otherwise stated.

### (4) Lithium Salt

The non-aqueous electrolyte solution of the present invention includes a lithium salt.

Any lithium salt typically used in an electrolyte solution for a lithium secondary battery may be used as the lithium salt without limitation, and, specifically, the lithium salt may include Li⁺ as a cation, and may include at least one selected from F⁻, Cl⁻, Br⁻, I⁻, NO₃⁻, N(CN)₂⁻, BF₄⁻, ClO₄⁻, E₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may be at least one selected from LiPF₆, LiClO₄, LiBF₄, LiN(FSO₂)₂ (LiFSI), LiN(SO₂CF₃)₂ (LiTFSI), lithium bis(pentafluoroethanesulfonyl)imide (LiBETI), LiSO₃CF₃, LiPO₂F₂, lithium bis(oxalate)borate (LiBOB), lithium difluoro(oxalate)borate (LiFOB), lithium difluoro (bisoxalato)phosphate (LiDFOP), lithium tetrafluoro(oxalate)phosphate (LiTFOP), and lithium fluoromalonato(difluoro)borate (LiFMDFB), and may preferably be LiPF₆.

In an embodiment of the present invention, a concentration of the lithium salt in the non-aqueous organic solution containing the lithium salt and the organic solvent may be in a range of 0.5 M to 4.0 M, particularly 0.5 M to 3.0 M, and more particularly 0.8 M to 2.0 M. When the concentration of the lithium salt is within the above range, adequate electrolyte impregnability may be obtained by preventing excessive increases in viscosity and surface tension while sufficiently securing an effect of improving low-temperature output and improving cycle characteristics.

### Lithium Secondary Battery

Next, a lithium secondary battery according to the present invention will be described.

The lithium secondary battery according to the present invention includes a positive electrode including a positive electrode active material, a negative electrode including a negative electrode active material, a separator disposed between the positive electrode and the negative electrode, and a non-aqueous electrolyte solution. In this case, the non-aqueous electrolyte solution is the above-described non-aqueous electrolyte solution according to the present invention. Since the non-aqueous electrolyte solution has been described above, a description thereof will be omitted and other components will be described below.

### (1) Positive Electrode

The positive electrode according to the present invention includes a positive electrode active material, and may be prepared by coating a positive electrode current collector with a positive electrode slurry including the positive electrode active material, a binder, a conductive agent, and a solvent, and then drying and rolling the coated positive electrode current collector.

The positive electrode current collector is not particularly limited so long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from LCO (LiCoO₂); LNO (LiNiO₂); LMO (LiMnO₂); LiMn₂O₄; LiCoPO₄; LFP (LiFePO₄); and a lithium composite transition metal oxide containing nickel (Ni), cobalt (Co), and manganese (Mn).

The positive electrode active material may have a molar ratio of nickel among transition metals of 60 mol% or more, preferably 70 mol% or more, and more preferably 80 mol% or more.

In an embodiment of the present invention, the lithium composite transition metal oxide may be a compound represented by Formula 2 below. That is, the positive electrode active material according to an embodiment of the present invention may include a lithium composite transition metal oxide represented by Formula 2 below.

[Formula 2] Li₁₊ₓ(NiₐCo_{b}Mn_{c}M_{d})O₂

In Formula 2,
M is at least one selected from tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and
1+x, a, b, c, and d are atomic fractions of each independent element,
wherein -0.2≤x≤0.2, 0.6≤a<1, 0<b≤0.3, 0<c≤0.3, 0≤d≤0.1, and a+b+c+d=1.

1+x represents a molar ratio of lithium in the lithium composite transition metal oxide, wherein x may satisfy - 0.1≤x≤0.2 or 0≤x≤0.2. When the molar ratio of the lithium satisfies the above range, a crystal structure of the lithium composite transition metal oxide may be stably formed.
a represents a molar ratio of nickel among total metals excluding lithium in the lithium composite transition metal oxide, wherein a may satisfy 0.70≤a<1, 0.80≤a<1, or 0.85≤a<1. When the molar ratio of the nickel satisfies the above range, since high energy density may be exhibited, high capacity may be achieved.
b represents a molar ratio of cobalt among the total metals excluding lithium in the lithium composite transition metal oxide, wherein b may satisfy 0<b≤0.20, 0<b≤0.15, or 0<b≤0.10. When the molar ratio of the cobalt satisfies the above range, good resistance characteristics and output characteristics may be achieved.
c represents a molar ratio of manganese among the total metals excluding lithium in the lithium composite transition metal oxide, wherein c may satisfy 0<c≤0.20, 0<c≤0.15, or 0<c≤0.10. When the molar ratio of the manganese satisfies the above range, structural stability of the positive electrode active material is excellent.

In an embodiment of the present invention, the lithium composite transition metal oxide may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and may preferably include Al as a doping element. In other words, d representing a molar ratio of the doping element among the total metals excluding lithium in the lithium composite transition metal oxide may satisfy 0<d≤0.10, 0<d≤0.08, or 0<d≤0.05.

Preferably, a, b, c, and d in Formula 2 may satisfy 0.70≤a<1, 0<b≤0.2, 0<c≤0.2, and 0≤d≤0.1, respectively.

The positive electrode active material may be included in an amount of 80 wt% to 99 wt%, specifically, 90 wt% to 99 wt% based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

Also, the conductive agent is a material providing conductivity without causing adverse chemical changes in the battery, wherein it may be added in an amount of 0.5 wt% to 20 wt% based on the total weight of the solid content in the positive electrode slurry.

The conductive agent, for example, may be selected from a conductive material, such as: carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as fluorocarbon powder, aluminum powder, and nickel powder; conductive whiskers such as zinc oxide whiskers and potassium titanate whiskers; conductive metal oxide such as titanium oxide; and polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 40 wt% to 90 wt%, preferably, 50 wt% to 80 wt%.

### (2) Negative Electrode

The negative electrode according to the present invention includes a negative electrode active material, and may be prepared by coating a negative electrode current collector with a negative electrode slurry including the negative electrode active material, a binder, a conductive agent, and a solvent, and then drying and rolling the coated negative electrode current collector.

The negative electrode current collector generally has a thickness of 3 µm to 500 µm. The negative electrode current collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like; or an aluminum-cadmium alloy may be used. Also, similar to the positive electrode current collector, the negative electrode current collector may have fine surface roughness to improve bonding strength with the negative electrode active material, and the negative electrode current collector may be used in various shapes such as a film, a sheet, a foil, a net, a porous body, a foam body, a non-woven fabric body, and the like.

Furthermore, the negative electrode active material may include at least one selected from a carbon material capable of reversibly intercalating/deintercalating lithium ions; metal or an alloy of lithium and the metal; a metal composite oxide; a material which may be doped and undoped with lithium; lithium metal; and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

At least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x<2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), sulfur (S), selenium (Se), tellurium (Te), polonium (Po), and a combination thereof.

Examples of the transition metal oxide may be lithium-containing titanium composite oxide (LTO), vanadium oxide, and lithium vanadium oxide.

In an embodiment of the present invention, the negative electrode active material may be a mixture of the carbon-based material and the silicon-based material, and may preferably be a mixture of graphite and SiO.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives.

The solvent of the negative electrode slurry may include water; or an organic solvent, such as NMP and alcohol, and may be used in an amount such that desirable viscosity is obtained when the negative electrode active material, the binder, and the conductive agent are included. For example, the solvent may be included in an amount such that a concentration of a solid content in the slurry including the negative electrode active material, the binder, and the conductive agent is in a range of 30 wt% to 80 wt%, preferably, 40 wt% to 70 wt%.

### (3) Separator

The lithium secondary battery according to the present invention includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution and excellent safety as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

### <Examples: Preparation of Lithium Secondary Batteries>

### Example 1

### (Preparation of Non-aqueous Electrolyte Solution)

After ethylene carbonate (EC) : dimethyl carbonate (DMC) were mixed in a volume ratio of 30:70, a non-aqueous organic solution was prepared by dissolving LiPF₆ such that a concentration of the LiPF₆ was 1.2 M. 100 wt% of a non-aqueous electrolyte solution was prepared by mixing 2 wt% of the compound represented by Formula 1A, 2 wt% of vinylene carbonate (VC), and the non-aqueous organic solution as a remainder.

### (Preparation of Lithium Secondary Battery)

Li(Ni_{0.8}Co_{0.1}Mn_{0.1})O₂ as a positive electrode active material, a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 60 wt%). A 15 µm thick aluminum (Al) thin film, as a positive electrode current collector, was coated with the positive electrode slurry, dried, and then roll-pressed to prepare a positive electrode.

A negative electrode active material (composed of 96 wt% of graphite and 4 wt% of SiO), a binder (SBR-CMC), and a conductive agent (carbon black) were added in a weight ratio of 95:3.5:1.5 to water, as a solvent, to prepare a negative electrode slurry (solid content: 60 wt%). A 6 µm thick copper (Cu) thin film, as a negative electrode current collector, was coated with the negative electrode slurry, dried, and then roll-pressed to prepare a negative electrode.

An electrode assembly was prepared by sequentially stacking the positive electrode, a polyolefin-based porous separator coated with inorganic particles (Al₂O₃), and the negative electrode.

The electrode assembly prepared was accommodated in a cylindrical battery case, and the above-prepared non-aqueous electrolyte solution was injected thereinto to prepare a lithium secondary battery.

### Example 2

A lithium secondary battery was prepared in the same manner as in Example 1 except that an amount of the compound represented by Formula 1A was changed to 1 wt% during the preparation of the non-aqueous electrolyte solution.

### Example 3

A lithium secondary battery was prepared in the same manner as in Example 1 except that an amount of the compound represented by Formula 1A was changed to 1 wt% and 1 wt% of 1,3-propane sultone (PS) was further added during the preparation of the non-aqueous electrolyte solution.

### Example 4

A lithium secondary battery was prepared in the same manner as in Example 1 except that an amount of the compound represented by Formula 1A was changed to 0.3 wt% during the preparation of the non-aqueous electrolyte solution.

### Example 5

A lithium secondary battery was prepared in the same manner as in Example 1 except that the compound represented by Formula 1B was used instead of the compound represented by Formula 1A during the preparation of the non-aqueous electrolyte solution.

### Example 6

A lithium secondary battery was prepared in the same manner as in Example 5 except that an amount of the compound represented by Formula 1B was changed to 1 wt% during the preparation of the non-aqueous electrolyte solution.

### Example 7

A lithium secondary battery was prepared in the same manner as in Example 5 except that an amount of the compound represented by Formula 1B was changed to 1 wt% and 1 wt% of 1,3-propane sultone (PS) was further added during the preparation of the non-aqueous electrolyte solution.

### Example 8

A lithium secondary battery was prepared in the same manner as in Example 5 except that an amount of the compound represented by Formula 1B was changed to 0.3 wt% during the preparation of the non-aqueous electrolyte solution.

### Comparative Example 1

A lithium secondary battery was prepared in the same manner as in Example 1 except that the compound represented by Formula 1A was not added during the preparation of the non-aqueous electrolyte solution.

### Comparative Example 2

A lithium secondary battery was prepared in the same manner as in Example 1 except that the compound represented by Formula 1A was not added and 1 wt% of 1,3-propane sultone (PS) was further added during the preparation of the non-aqueous electrolyte solution.

### Comparative Example 3

A lithium secondary battery was prepared in the same manner as in Example 3 except that a compound represented by the following Formula C was used instead of the compound represented by Formula 1A and an amount thereof was changed to 0.3 wt% during the preparation of the non-aqueous electrolyte solution.

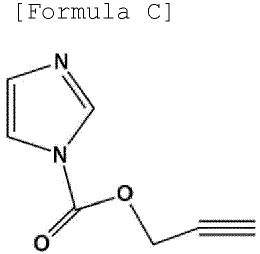

### Comparative Example 4.

A lithium secondary battery was prepared in the same manner as in Example 1 except that a compound represented by the following Formula D was used instead of the compound represented by Formula 1A and an amount thereof was changed to 2 wt% during the preparation of the non-aqueous electrolyte solution.

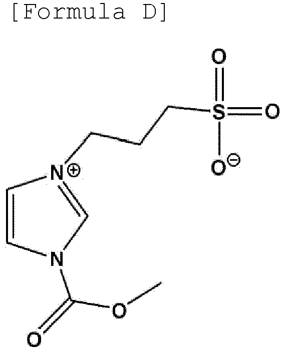

### <Experimental Examples: Battery Performance Evaluation>

### Experimental Example 1: Measurement of Capacity and Resistance After High-temperature Storage

After a formation process was performed on the lithium secondary batteries prepared in the examples and the comparative examples, the lithium secondary batteries were constant current/constant voltage (CC/CV) charged (0.05 C cut off) at 0.5 C rate to 4.25 V at 25°C and were constant current (CC) discharged at 0.5 C rate to 2.50 V, and initial discharge capacity and initial resistance were then measured.

Thereafter, each battery was fully charged to a state of charge (SOC) of 100% under the same conditions and stored at a high temperature (55°C) for 8 weeks. Thereafter, after each battery was transferred to a charger and discharger at room temperature (25°C), capacity and resistance were measured again, capacity retention and resistance increase rate were calculated through Equations 1 and 2 below, and the results thereof are presented in Table 1 below. Capacity retention(%) = (discharge capacity after high-temperature storage/initial discharge capacity) × 100 Resistance increase rate(%) = { (resistance after high-temperature storage - initial resistance)/initial resistance} × 100

### Experimental Example 2: Measurement of Gas Generation Amount After High-temperature Storage

After a formation process was performed on the lithium secondary batteries prepared in the examples and the comparative examples, the lithium secondary batteries were charged under constant current/constant voltage conditions (0.05 C cut off) at 0.5 C rate to 4.25 V at 25°C such that the lithium secondary batteries were fully charged to an SOC of 100%. After the fully-charged batteries were stored at 72°C for 4 weeks and then transferred to a charger and discharger at room temperature (25°C), gas collected in a cylindrical can was analyzed using a gas chromatography-thermal conductivity detector (GC-TCD), and a relative gas generation amount of each battery was calculated when a gas generation amount measured in Comparative Example 1 was set as 100% and presented in Table 1 below.

### Experimental Example 3: High-temperature Lifetime Evaluation

After a formation process was performed on the lithium secondary batteries prepared in the examples and the comparative examples, the lithium secondary batteries were constant current/constant voltage (CC/CV) charged (0.05 C cut off) at 0.3 C rate to 4.25 V at 40°C and were constant current (CC) discharged at 0.5 C rate to 2.85 V.

Performance of the charging/discharging once was set as one cycle, and, after the same charging/discharging was repeated 250 times, a resistance increase rate (DCIR increase) was measured through Equation 3 below. Measurement results are presented in Table 1 below. Resistance increase rate(%) = { (resistance after 250 cycles - resistance after one cycle) /resistance after one cycle} × 100

### Experimental Example 4: Thermal Safety Evaluation

After a formation process was performed on the lithium secondary batteries prepared in the examples and the comparative examples, the lithium secondary batteries were charged under constant current/constant voltage conditions (0.05 C cut off) at 0.5 C rate to 4.25 V at 25°C such that the lithium secondary batteries were fully charged to an SOC of 100%. A hot box evaluation test was conducted in which the fully-charged batteries was heated to 130°C at a heating rate of 5°C/min and was then left standing for 30 minutes to confirm whether or not the battery was ignited.

The results thereof are listed in Table 1 below, a case, in which the battery was not ignited, was indicated as "PASS", and a case, in which the battery was ignited, was indicated as "FAIL".

**[Table 1]**

| | Amount (wt%) | | | Experimental Example 1 | | Experi mental Exampl e 2 | Experi mental Exampl e 3 | Experi mental Exampl e 4 |
|---|---|---|---|---|---|---|---|---|
| | Formu la 1 | VC | PS | Capaci ty retent ion (%) | Resist ance increa se rate (%) | Gas genera tion amount (%) | Resist ance increa se rate (%) | Therma l safety evalua tion |
| Example 1 | 2 (1A) | 2 | - | 95.6 | 9.2 | 65.6 | 9.8 | Pass |
| Example 2 | 1 (1A) | 2 | - | 90.2 | 24.2 | 70.1 | 14.6 | Pass |
| Example 3 | 1 (1A) | 2 | 1 | 92.2 | 14.2 | 68.6 | 11.3 | Pass |
| Example 4 | 0.3 (1A) | 2 | - | 87.2 | 27.6 | 73.2 | 17.8 | Pass |
| Example 5 | 2 (1B) | 2 | - | 95.5 | 10.2 | 67.0 | 10.3 | Pass |
| Example 6 | 1 (1B) | 2 | - | 91.2 | 24.6 | 72.5 | 15.9 | Pass |
| Example 7 | 1 (1B) | 2 | 1 | 93.0 | 16.7 | 68.3 | 12.5 | Pass |
| Example 8 | 0.3 (1B) | 2 | - | 88.7 | 28.1 | 74.8 | 18.5 | Pass |
| Comparative Example 1 | - | 2 | - | 78.7 | 33.6 | 100.0 | 25.8 | Fail |
| Comparative Example 2 | - | 2 | 1 | 85.2 | 31.4 | 79.0 | 21.5 | Fail |
| Comparative Example 3 | 0.3 (C) | 2 | 1 | 87.0 | 29.7 | 75.9 | 20.9 | Pass |
| Comparative Example 4 | 2 (D) | 2 | - | 85.8 | 30.8 | 77.0 | 21.1 | Pass |

According to the results of Table 1, when the compound represented by Formula 1 was used as the electrolyte solution additive of the lithium secondary battery according to the present invention, it may be confirmed that high-temperature durability was improved and the gas generation amount was not only reduced, but resistance characteristics were also improved in comparison to those of Comparative Examples 1 and 2, in which the compound represented by Formula 1 was not used, and Comparative Example 3 in which the compound represented by Formula C having a structure similar to that of Formula 1 but not containing a sulfonate group was used. With respect to Comparative Example 4, since Formula D did not contain a propargyl group which may form an SEI film on the negative electrode by polymerization with vinylene carbonate (VC), it may be confirmed that high-temperature durability was reduced.

Particularly, in a case in which the amount of the compound represented by Formula 1 was 1 wt% or more, most preferably, 2 wt% or more, it may be confirmed that the best results were obtained in all evaluation items. Through comparison of Example 2 with Example 3 and Example 6 with Example 7, it may be confirmed that, in a case in which the same amount was used, the further addition of the PS exhibited better results, but, through comparison of Example 1 with Example 3 and Example 5 with Example 7, it may be confirmed that an increase in the amount of the compound represented by Formula 1 was more advantageous than using the PS.

## Claims

1. A non-aqueous electrolyte solution for a lithium secondary battery, the non-aqueous electrolyte solution comprising a lithium salt; an organic solvent; and a compound represented by Formula 1: 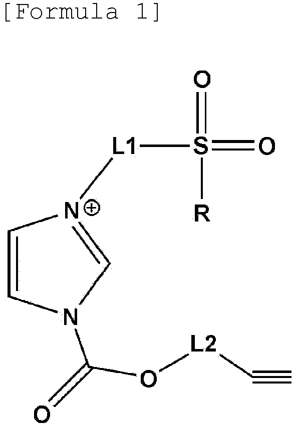 wherein, in Formula 1,
R is O⁻; or OR1, wherein R1 is hydrogen; or an alkyl group having 1 to 10 carbon atoms,
L1 is a direct bond; or an alkylene group having 1 to 30 carbon atoms, and
L2 is an alkylene group having 1 to 10 carbon atoms.

2. The non-aqueous electrolyte solution for a lithium secondary battery of claim 1, wherein the compound represented by Formula 1 is represented by Formula 1-1 or Formula 1-2: 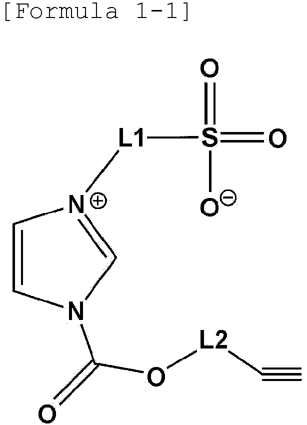 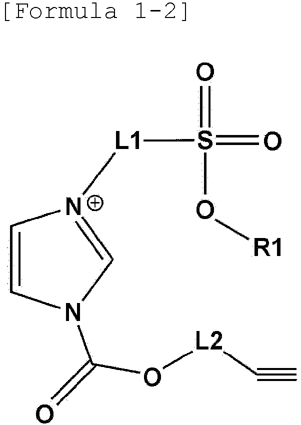 wherein, in Formulae 1-1 and 1-2,
R1, L1, and L2 are as defined in Formula 1.

3. The non-aqueous electrolyte solution for a lithium secondary battery of claim 1, wherein L1 is represented by - (CH₂)ₙ-,
wherein n is an integer of 1 to 20.

4. The non-aqueous electrolyte solution for a lithium secondary battery of claim 1, wherein L2 is represented by - (CH₂)ₘ-,
wherein m is an integer of 1 to 10.

5. The non-aqueous electrolyte solution for a lithium secondary battery of claim 1, wherein an amount of the compound represented by Formula 1 is in a range of 0.1 wt% to 5 wt% based on a total weight of the non-aqueous electrolyte solution.

6. The non-aqueous electrolyte solution for a lithium secondary battery of claim 1, wherein an amount of the compound represented by Formula 1 is in a range of 0.5 wt% to 5 wt% based on a total weight of the non-aqueous electrolyte solution.

7. The non-aqueous electrolyte solution for a lithium secondary battery of claim 1, further comprising at least one additive selected from vinylene carbonate, 1,3-propane sultone, ethylene sulfate, and lithium difluorophosphate.

8. The non-aqueous electrolyte solution for a lithium secondary battery of claim 1, wherein the organic solvent comprises a mixture of at least two selected from a cyclic carbonate-based solvent, a linear carbonate-based solvent, and a linear ester-based solvent.

9. A lithium secondary battery comprising:
a positive electrode including a positive electrode active material;
a negative electrode including a negative electrode active material;
a separator disposed between the positive electrode and the negative electrode; and
the non-aqueous electrolyte solution of claim 1.

10. The lithium secondary battery of claim 9, wherein the positive electrode active material comprises a lithium composite transition metal oxide represented by Formula 2:
[Formula 2] Li₁₊ₓ(NiₐCo_{b}Mn_{c}M_{d})O₂
wherein, in Formula 2,
M is at least one selected from tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and
1+x, a, b, c, and d are atomic fractions of each independent element,
wherein -0.2≤x≤0.2, 0.6≤a<1, 0<b≤0.3, 0<c≤0.3, 0≤d≤0.1, and a+b+c+d=1.

11. The lithium secondary battery of claim 10, wherein a, b, c, and d in Formula 2 satisfy 0.70≤a<1, 0<b≤0.2, 0<c≤0.2, and 0≤d≤0.1, respectively.

## Patentansprüche

1. Nichtwässrige Elektrolytlösung für eine Lithium-Sekundärbatterie, wobei die nichtwässrige Elektrolytlösung ein Lithiumsalz; ein organisches Lösungsmittel; und eine durch die Formel 1 dargestellte Verbindung umfasst: 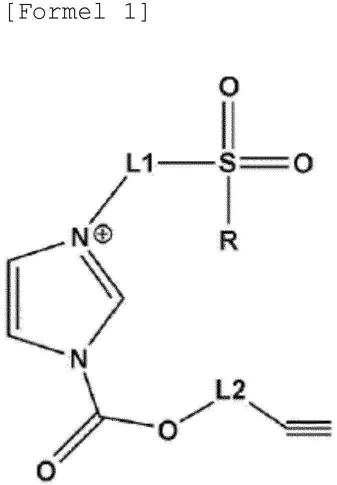 worin in der Formel 1
R O⁻; oder OR1 ist, worin R1 Wasserstoff; oder eine Alkylgruppe mit 1 bis 10 Kohlenstoffatomen ist,
L1 eine direkte Bindung; oder eine Alkylengruppe mit 1 bis 30 Kohlenstoffatomen ist und
L2 eine Alkylengruppe mit 1 bis 10 Kohlenstoffatomen ist.

2. Nichtwässrige Elektrolytlösung für eine Lithium-Sekundärbatterie gemäß Anspruch 1, worin die durch die Formel 1 dargestellte Verbindung durch die Formel 1-1 oder die Formel 1-2 dargestellt ist: 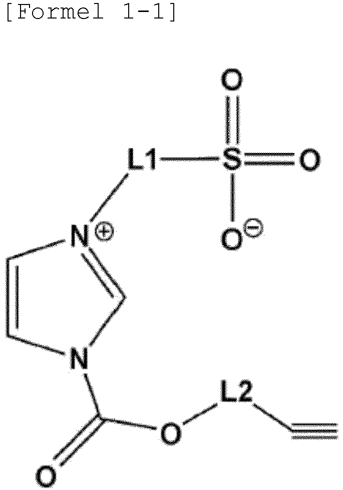 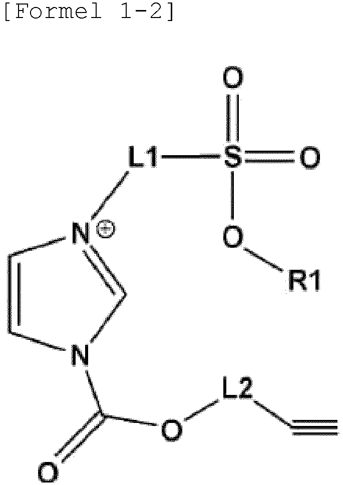 worin in den Formeln 1-1 und 1-2
R1, L1 und L2 wie in Formel 1 definiert sind.

3. Nichtwässrige Elektrolytlösung für eine Lithium-Sekundärbatterie gemäß Anspruch 1, worin L1 durch -(CH₂)ₙ- dargestellt ist,
worin n eine ganze Zahl von 1 bis 20 ist

4. Nichtwässrige Elektrolytlösung für eine Lithium-Sekundärbatterie gemäß Anspruch 1, worin L2 durch -(CH₂)ₘ- dargestellt ist,
worin m eine ganze Zahl von 1 bis 10 ist.

5. Nichtwässrige Elektrolytlösung für eine Lithium-Sekundärbatterie gemäß Anspruch 1, worin die Menge der durch die Formel 1 dargestellten Verbindung im Bereich von 0,1 Gew.-% bis 5 Gew.-% liegt, bezogen auf das Gesamtgewicht der nichtwässrigen Elektrolytlösung.

6. Nichtwässrige Elektrolytlösung für eine Lithium-Sekundärbatterie gemäß Anspruch 1, worin die Menge der durch die Formel 1 dargestellten Verbindung im Bereich von 0,5 Gew.-% bis 5 Gew.-% liegt, bezogen auf das Gesamtgewicht der nichtwässrigen Elektrolytlösung.

7. Nichtwässrige Elektrolytlösung für eine Lithium-Sekundärbatterie gemäß Anspruch 1, ferner umfassend zumindest ein Additiv, ausgewählt aus Vinylencarbonat, 1,3-Propansulton, Ethylensulfat und Lithiumdifluorphosphat.

8. Nichtwässrige Elektrolytlösung für eine Lithium-Sekundärbatterie gemäß Anspruch 1, worin das organische Lösungsmittel eine Mischung von zumindest zwei umfasst, ausgewählt aus einem Lösungsmittel auf Basis eines cyclischen Carbonats, einem Lösungsmittel auf Basis eines linearen Carbonats und einem Lösungsmittel auf Basis eines linearen Esters.

9. Lithium-Sekundärbatterie, umfassend:
eine positive Elektrode, umfassend ein Positivelektroden-Aktivmaterial;
eine negative Elektrode, umfassend ein Negativelektroden-Aktivmaterial;
einen zwischen der positiven Elektrode und der negativen Elektroden vorgesehenen Separator; und
die nichtwässrige Elektrolytlösung gemäß Anspruch 1.

10. Lithium-Sekundärbatterie gemäß Anspruch 9, worin das Positivelektroden-Aktivmaterial ein durch die Formel 2 dargestelltes Lithium-Komposit-Übergangsmetalloxid umfasst:
[Formel 2] Li₁₊ₓ(NiₐCo_{b}Mn_{c}M_{d})O₂
worin in der Formel 2
M zumindest eines ist, ausgewählt aus Wolfram (W), Kupfer (Cu), Eisen (Fe), Vanadium (V), Chrom (Cr), Titan (Ti), Zirkonium (Zr), Zink (Zn), Aluminium (Al), Indium (In), Tantal (Ta), Yttrium (Y), Lanthan (La), Strontium (Sr), Gallium (Ga), Scandium (Sc), Gadolinium (Gd), Samarium (Sm), Kalzium (Ca), Cer (Ce), Niob (Nb), Magnesium (Mg), Bor (B) und Molybdän (Mo), und
1+x, a, b, c und d Atomfraktionen von jedem unabhängigen Element sind,
worin -0,2≤x≤0,2, 0,6≤a<1, 0<b≤0,3, 0<c≤0,3, 0≤d≤0,1 und a+b+c+d=1.

11. Lithium-Sekundärbatterie gemäß Anspruch 10, worin a, b, c und d in Formel 2 0,70≤a<1, 0<b≤0,2, 0<c≤0,2 bzw. 0≤d≤0,1 erfüllen.

## Revendications

1. Solution d'électrolyte non aqueux pour une batterie secondaire au lithium, la solution d'électrolyte non aqueux comprenant un sel de lithium ; un solvant organique ; et un composé représenté par la formule 1 : 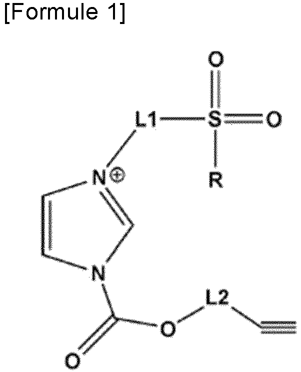 dans laquelle, dans la formule 1,
R est O⁻ ; ou OR1, dans laquelle R1 est hydrogène ; ou un groupe alkyle présentant 1 à 10 atomes de carbone,
L1 est une liaison directe ; ou un groupe alkylène présentant 1 à 30 atomes de carbone, et
L2 est un groupe alkylène présentant 1 à 10 atomes de carbone.

2. Solution d'électrolyte non aqueux pour une batterie secondaire au lithium selon la revendication 1, dans laquelle le composé représenté par la formule 1 est représenté par la formule 1-1 ou la formule 1-2 : 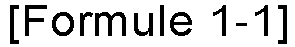 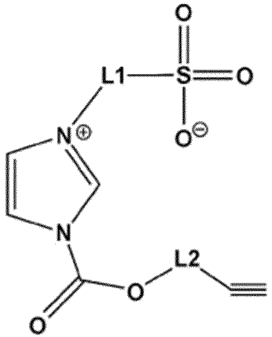 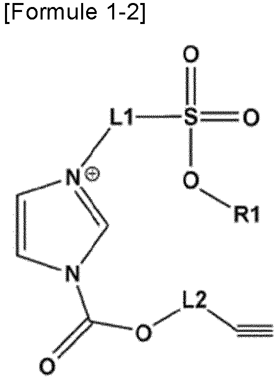 dans laquelle, dans les formules 1-1 et 1-2,
R1, L1 et L2 sont tels que définis dans la formule 1.

3. Solution d'électrolyte non aqueux pour une batterie secondaire au lithium selon la revendication 1, dans laquelle L1 est représenté par -(CH₂)ₙ-,
dans laquelle n est un nombre entier de 1 à 20.

4. Solution d'électrolyte non aqueux pour une batterie secondaire au lithium selon la revendication 1, dans laquelle L2 est représenté par -(CH₂)ₘ-,
dans laquelle m est un nombre entier de 1 à 10.

5. Solution d'électrolyte non aqueux pour une batterie secondaire au lithium selon la revendication 1, dans laquelle une quantité du composé représenté par la formule 1 est dans une plage de 0,1 % en poids à 5 % en poids sur la base d'un poids total de la solution d'électrolyte non aqueux.

6. Solution d'électrolyte non aqueux pour une batterie secondaire au lithium selon la revendication 1, dans laquelle une quantité du composé représenté par la formule 1 est dans une plage de 0,5 % en poids à 5 % en poids sur la base d'un poids total de la solution d'électrolyte non aqueux.

7. Solution d'électrolyte non aqueux pour une batterie secondaire au lithium selon la revendication 1, comprenant en outre au moins un additif sélectionné parmi le carbonate de vinylène, le 1, le 3-propane sultone, le sulfate d'éthylène et le difluorophosphate de lithium.

8. Solution d'électrolyte non aqueux pour une batterie secondaire au lithium selon la revendication 1, dans laquelle le solvant organique comprend un mélange d'au moins deux sélectionnés parmi un solvant cyclique à base de carbonate, un solvant linéaire à base de carbonate et un solvant linéaire à base d'ester.

9. Batterie secondaire au lithium comprenant :
une électrode positive incluant un matériau actif d'électrode positive ;
une électrode négative incluant un matériau actif d'électrode négative ;
un séparateur disposé entre l'électrode positive et l'électrode négative ; et
la solution d'électrolyte non aqueux selon la revendication 1.

10. Batterie secondaire au lithium selon la revendication 9, dans laquelle le matériau actif d'électrode positive comprend un oxyde de métal de transition composite au lithium représenté par la formule 2 :
[Formule 2] Li₁₊ₓ(NiₐCo_{b}Mn_{c}M_{d})O₂
dans laquelle, dans la formule 2,
M est au moins l'un sélectionné parmi le tungstène (W), le cuivre (Cu), le fer (Fe), le vanadium (V), le chrome (Cr), le titane (Ti), le zirconium (Zr), le zinc (Zn), l'aluminium (Al), l'indium (In), le tantale (Ta), l'yttrium (Y), le lanthane (La), le strontium (Sr), le gallium (Ga), le scandium (Sc), le gadolinium (Gd), le samarium (Sm), le calcium (Ca), le cérium (Ce), le niobium (Nb), le magnésium (Mg), le bore (B) et le molybdène (Mo), et
1+x, a, b, c et d sont des fractions atomiques de chaque élément indépendant,
dans laquelle -0,2 ≤ x ≤ 0,2, 0,6 ≤ a < 1, 0 < b ≤ 0,3, 0 < c ≤ 0,3, 0 ≤ d ≤ 0,1, et a+b+c+d=1.

11. Batterie secondaire au lithium selon la revendication 10, dans laquelle a, b, c et d dans la formule 2 satisfont 0,70 ≤ a < 1, 0 < b ≤ 0,2, 0 < c ≤ 0,2, et 0 ≤ d ≤ 0,1, respectivement.
